# EUROPEAN PATENT SPECIFICATION

(11) **EP 3 579 682 B1**
(45) Date of publication and mention of the grant of the patent: **09.12.2020**
(21) Application number: 18700331.4
(22) Date of filing: 10.01.2018
(51) Int. Cl.: A01G 3/025

(54) **HANDHELD TOOL**
HANDHALTBARES WERKZEUG
OUTIL À MAIN

(30) Priority: 07.02.2017 DE 102017001112
(43) Date of publication of application: 18.12.2019
(73) Proprietor: Husqvarna AB, 561 82 Huskvarna (SE)
(72) Inventor: MISSEL, Patrick, 89198 Westerstetten (DE); KOHL, Peter, 89257 Illertissen (DE)
(74) Representative: Finkele, Rolf
(86) International application number: PCT/EP2018/050557
(87) International publication number: WO 2018/145846

(56) References cited:
- EP-A1- 2 979 538
- US-B1- 6 272 755

## Description

### TECHNICAL FIELD

The present invention relates to handheld tools, and more particularly to a pruning lopper.

### BACKGROUND

Various handheld tools used for gardening purpose are well known in the art. The handheld tools are designed to perform various gardening related operations such as, trimming, watering, spreading fertilizers, etc. The tools used for trimming parts such as branches may generally be carried out by using pruners, saceuters, and cutters. The trimming or cutting tools may be operated mechanically or electrically using a battery power supply or AC supply. Alternatively, the tools may be operated manually by an operator. A force may be applied for actuating cutting blades through actuating mechanisms including, but not limited to, chain, rope, and pulley arrangement for performing cutting operations. Operators may experience difficulty in trimming of the parts due to nonuniform sizes and harder outer surfaces of the parts. In order to cut or trim these kinds of parts, the operator may be required to often change the cutting tools suitable for cutting or trimming such parts. These scenarios may be laborious and cumbersome operations and therefore, may cause fatigue to the operator.

One kind of tool used for carrying out the cutting or trimming operation is a pruning tool. The pruning tool is used for cutting the parts of plants or shrubs or trees located at a distance from a ground surface. The pruning tool generally includes a pole, a handle member with an actuating mechanism and a cutting blade coupled to the actuating mechanism. The cutting blade is actuated by applying force at the handle member to operate the cutting blade through the actuating mechanism. The quantity of the force at the cutting blade may need to be varied based on the different sizes of the parts of the plants like branches.

The US Patent 5,960,546 discloses a pruning device. The pruning device is used for cutting limbs. The pruning device includes a hollow tubular pole having an actuating assembly mounted on a first end of the pole, and a cutting assembly for engaging and cutting a limb mounted on a second end of the pole. A cable extends axially through the pole. The cable is connected at one end to the actuating assembly, and at the other end to the cutting assembly. The actuating assembly applies pulling force to the cable upon its operation. The cable triggers operation of the cutting assembly when the cable is subjected to pulling force. The cutting head includes a hook adapted to receive the limb, and a cutting blade pivotally mounted to the hook for cutting the limb. The blade pivotally moves toward the hook upon operation of the actuating assembly. The cutting head also includes a pulley assembly through which the cable is run upon exiting the pole.

Another example is provided by US6272755 which discloses an extendable tool which provides an actuating line for actuating a lopping mechanism through a pulley. The actuating line has one end coupled to a lower tubular section and other end coupled to handle. The handle is pulled to actuate the lopping mechanism.

Therefore, in light of the foregoing, there is a need for an improved tool.

### SUMMARY

In view of the above, it is an objective of the present invention to solve or at least reduce the problems discussed above. The objective is at least partially achieved with a handheld tool according to claim 1. The handheld tool includes a pole member having a first end and a second end distal to the first end. The handheld tool further includes an implement member operably disposed at the first end of the pole member. The handheld tool further includes a handle member having a holding portion and an elongated tube portion extending from the holding portion. The elongated tube portion is telescopically associated with the pole member, allowing sliding movement of the elongated tube portion relative to the pole member. The handheld tool further includes an actuating mechanism having an elongated tape slidably disposed within the pole member and coupled to the implement member. The elongated tape includes a first end portion connected to the elongated tube portion of the handle member, and a second end portion adapted to be selectively coupled with one of the pole member and the handle member.

According to the present invention, the actuating mechanism further includes a pulley member interfaced between the implement member and the elongated tape of the actuating mechanism, such that movement of the elongated tape engages the pulley member to operate the implement member.

According to the present invention, telescopic movement of the handle member moves both the first end portion and the second end portion of the elongated tape to move along with the pulley member, when the second end portion is coupled to the handle member.

According to the present invention, telescopic movement of the handle member moves the first end portion of the elongated tape to move along with the pulley member, when the second end portion is coupled to the pole member.

According to the present invention, the second end portion of the elongated tape is provided with a clamping member.

According to another aspect of the present invention, the handle member includes a protrusion for detachable connection thus coupling the clamping member of the elongated tape with the handle member.

According to another aspect of the present invention, the clamping member is pulled and placed over the protrusion for detachable connection thus coupling the elongated tape with the handle member.

According to another aspect of the present invention, the protrusion includes a bulged portion for seating the clamping member at the protrusion.

According to another aspect of the present invention, the handle member includes a cut-out proximal to the bulged portion.

According to another aspect of the present invention, the cut-out allows application of force on a bottom surface of the clamping member for lifting the clamping member seated on the bulged portion of the protrusion.

According to another aspect of the present invention, the handheld tool includes any of a pruning lopper and a tool with at least one movable member.

According to another aspect of the present invention, the elongated tape includes any of a cable, a rope, and a belt.

According to an aspect of the present invention, the elongated tape is composed of a non-elastic material.

According to an aspect of the present invention, the handheld tool further includes a gripping handle fixedly disposed on the pole member.

According to an aspect of the present invention, the handheld tool further includes an additional protrusion for clamping of the clamping member.

According to an aspect of the present invention, the handheld tool further includes a wedge adjuster adapted to be connected with the elongated tape and the handle member.

According to an aspect of the present invention, the wedge adjuster includes corrugations around at least one side of the wedge adjuster.

According to an aspect of the present invention, the handheld tool can be used for cutting or trimming both thick and small branches of the plants.

According to an aspect of the present invention, the handheld tool having the elongated tape detachably coupled at the pole member provides the engaged condition of the pulley member. The engaged condition provides an advantage of providing the first predetermined quantity of force to the implement portion for cutting or trimming harder parts of the plants.

According to an aspect of the present invention, the handheld tool having the elongated tape detachably coupled to the handle member provides the non-engaged condition of the pulley member. The non-engaged condition provides an advantage of providing the second predetermined quantity of force to the implement portion for cutting or trimming softer parts of the plants.

Various aspects of the present invention listed below may constitute an independent invention.

According to an aspect of the present invention, the handle member having the protrusion and the bulged portion in the protrusion provides a locking mechanism for the clamping member of the handheld tool.

According to an aspect of the present invention, the bulged portion in the protrusion prevents the release of the clamping member from unintended disassociation from the handle member.

According to an aspect of the present invention, when the operator wants to detach the clamping member from the handle member, the operator may release the locking of the clamping member from the protrusion by lifting the clamping member from the cut-out. Thus, the cut-out in the handle member facilitates the operator's handle for easily lifting the clamping member.

### BRIEF DESCRIPTION OF THE DRAWINGS

The invention will be described in more detail with reference to the enclosed drawings, wherein:
FIG. **1** shows a perspective view of a handheld tool, according to an embodiment of the present invention;
FIG. **2** shows a perspective view of the handheld tool showing an actuating mechanism, according to an embodiment of the present invention;
FIG. **3** shows a perspective view of the actuating mechanism shown in FIG. **2****,** according to an embodiment of the present invention;
FIG. **4** shows a perspective view of the handheld tool when a pulley member of the actuating mechanism is in an engaged condition, according to an embodiment of the present invention;
FIG. **5** shows a perspective view of the handheld tool when a handle member is positioned for detachably connecting with a clamping member of the actuating mechanism, according to an embodiment of the present invention;
FIG. **6** shows a perspective view of the handheld tool when the handle member is detachably connected with the clamping member of the actuating mechanism, according to an embodiment of the present invention;
FIG. **7** shows a perspective view of the handheld tool when a pulley member of the actuating mechanism is in a non-engaged condition, according to an embodiment of the present invention;
FIG. **8** shows a perspective view of a portion of the handheld tool when handle member is positioned for detachably connecting with a clamping member of the actuating mechanism, according to another embodiment of the present invention;
FIG. **9** shows a sectional view along axis **A-A'** of FIG. **8****,** according to an embodiment of the present invention
FIG. **10** shows a sectional view of the handheld tool shown in FIG. **8** when the clamping member detachably connected with the handle member is removed from the protrusion for detaching the clamping member from the handle member, according to an embodiment of the present invention;
FIG. **11** shows a perspective view of the handheld tool with the clamping member detachably connected with the handle member around the protrusion, according to an embodiment of the present invention; and
FIG. **12** shows a side cross-sectional view of the handle member of the handheld tool, according to an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

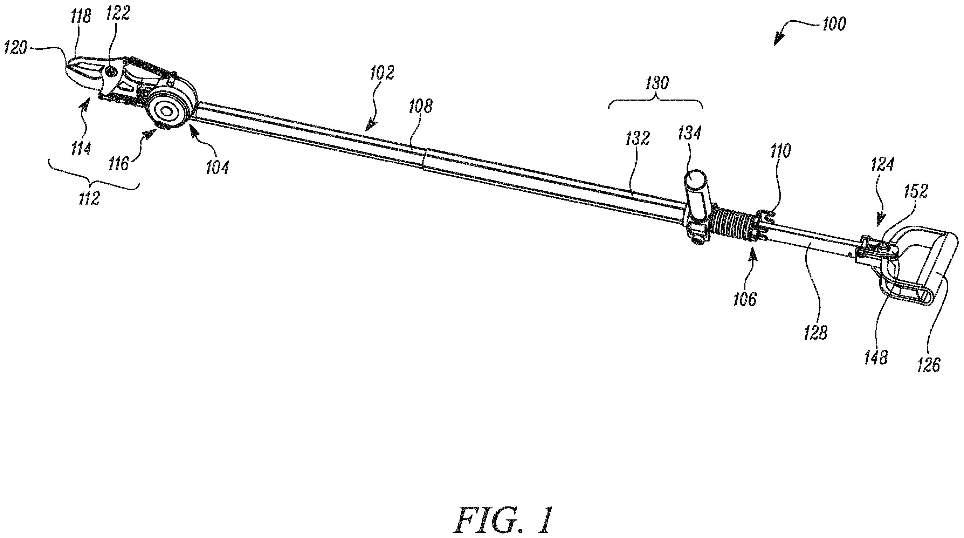

FIG. **1** illustrates a perspective view of a handheld tool **100,** according to an embodiment of the present invention. The handheld tool **100** may be a cutting tool including, but not limited to, a pruning lopper or a tool with at least one movable member. In the illustrated FIG. **1****,** the cutting tool is the pruning lopper. The term "handheld tool **100"** is also interchangeably used as "pruning looper" or "tool" in the present disclosure. The tool **100** includes a pole member **102** having a first end **104** and a second end **106** distal to the first end **104.** The pole member **102** is a cylindrical tubular member **108** having a central hole portion **110.** It is to be understood that the pole member **102** may be configured in any shape that facilitates the telescopic movement inside the pole member **102.** For example, the pole member **102** may be having a cross section like, a circular, a triangular or a polygonal. The first end **104** of the pole member **102** is adapted to connect with an implement member **112** of the tool **100.**

The implement member **112** of the tool **100** includes a tool portion **114** and a housing **116.** The tool portion **114** may include at least one movable member **118** and at least one non-movable member **120.** As illustrated in the FIG. **1****,** the tool portion **114** includes a blade arrangement with the movable member **118,** embodied as a movable blade. The movable member **118** is pivotally connected to the non-movable member **120.** The term "movable member" as used herein is interchangeably used as "movable blade". Also, the term "non-movable member" is interchangeably used as "stationary blade". The movable blade **118** may perform a pivotal movement with respect to the stationary blade **120** about a pivot point **122** during a cutting action. The movable blade **118** and the stationary blade **120** may include cutting edges, respectively for performing cutting or trimming operation. The stationary blade **120** may be designed to provide guidance to parts like branches to move towards the cutting edges. Further, various details of the implement member **112,** as illustrated in the FIG. **1****,** are purely exemplary in nature, and the implement member **112** may include any other design falling within the scope of the present invention.

The second end **106** of the pole member **102** is adapted to connect with a handle member **124.** The handle member **124** includes a holding portion **126** and an elongated tube portion **128.** The elongated tube portion **128** may be adapted to extend from the holding portion **126.** The elongated tube portion **128** is telescopically associated with the central hole portion **110** of the pole member **102.** The telescopic association between the elongated tube portion **128** and the pole member **102** allows sliding movement of the elongated tube portion **128** relative to the pole member **102.**

Further, the second end **106** of the pole member **102** is provided with a gripping handle **130.** The gripping handle **130** may be fixedly arranged on the pole member **102.** The gripping handle **130** may include a gripping member **132** and a holding member **134** extending perpendicularly from the gripping member **132.** In an embodiment, the gripping member **132** and the holding member **134** may be integral parts. In another embodiment, the gripping member **132** and the holding member **134** may be non-integral parts. In yet another embodiment, the handheld tool **100** may include only the gripping member **132.** The gripping member **132** may be a cylindrical tube composed of either an elastomeric material or a plastic material. The gripping member **132** is adapted to be disposed on the pole member **102** at the second end **106.** The gripping member **132** may be provided with a plurality of corrugations (not shown) for increasing holding friction during the operation of the handheld tool **100.** The gripping member **132** may be fixedly connected through a close tolerance fit between an inner surface (not shown) of the gripping member **132** and an outer surface (not shown) of the pole member **102** such that the gripping member **132** and the pole member **102** may undergo minimal or zero displacement relative to each other.

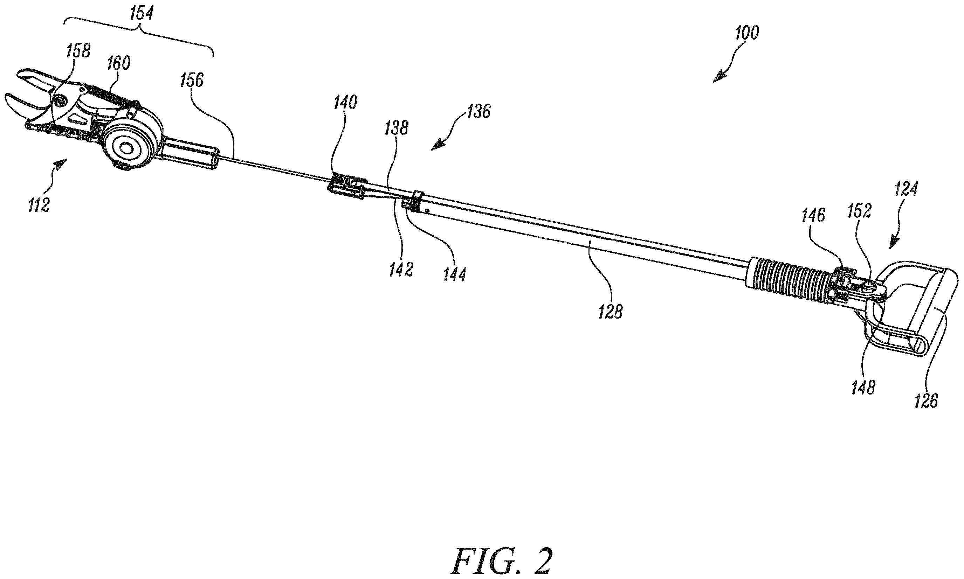

The handle member **124** is disposed proximally at the second end **106** of the pole member **102.** The handle member **124** may be composed of a plastic material or a n elastomeric material. The gripping member **132** and the handle member **124** are adapted to provide increased gripping of the handheld tool **100** during its operation. The handle member **124** is provided with a protrusion **152** for accommodating a clamping member **148** of an actuating mechanism **136** (shown in FIG. **2****)** of the tool **100.**

Further, the second end **106** of the pole member **102** may be provided with a notch **150** for receiving the clamping member **148** when rested at the pole member **102.** The clamping member **148** in the illustrated embodiment is a "U" shaped member hinged at the second end portion **146** of the elongated tape **138.** It should be understood that the clamping member **148** may be in any shape including, but not limited to, circular shape or hook shape.

The actuating mechanism **136** is adapted to be disposed inside the pole member **102.** The actuating mechanism **136** is used for actuating the implement member **112** of the tool **100.** The actuating mechanism **136** is adapted to connect with the implement member **112** and the handle member **124** of the tool **100.**

FIG. **2** illustrates a perspective view of the handheld tool **100** showing the actuating mechanism **136,** according to an embodiment of the present invention. The actuating mechanism **136** includes an elongated tape **138** slidably disposed within the pole member **102** (shown in FIG. **1****),** and coupled to the implement member **112** and the handle member **124** of the tool **100.** A pulley member **140** is interfaced between the implement member **112** and the elongated tape **138** of the actuating mechanism **136,** such that movement of the elongated tape **138** engages the pulley member **140** to operate the implement member **112.**

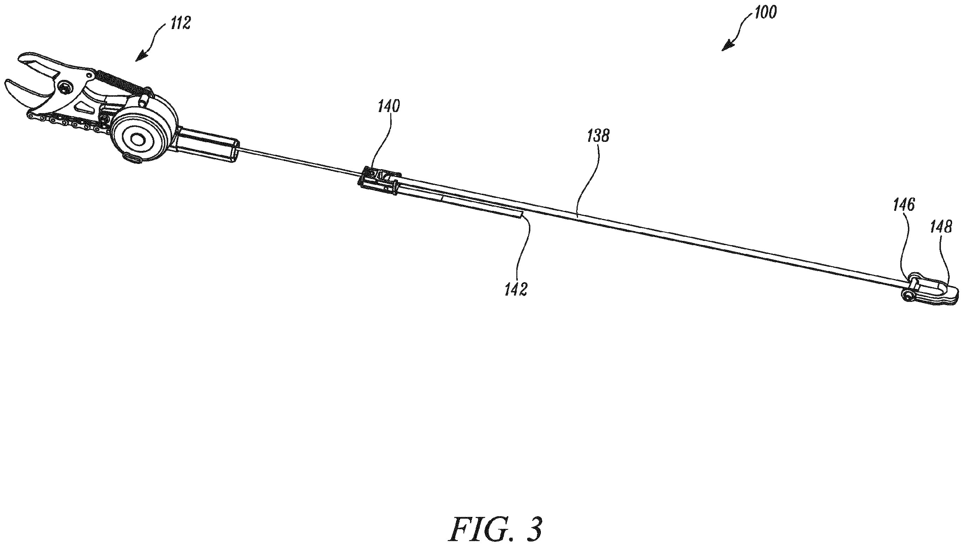

The elongated tape **138** includes a first end portion **142** adapted to be connected with the elongated tube portion **128** of the handle member **124** at a first end **144** of the elongated tube portion **128.** Further, a second end portion **146** of the elongated tape **138** is adapted to be connected with the clamping member **148,** via the pulley member **140.** The elongated tape **138** may include any one of a cable, a rope and a belt. It should be understood that the elongated tape **138** illustrated in the present invention is an exemplary embodiment without limiting the scope of the present invention. Thus, the elongated tape **138** may include any one of the cable or the rope or the belt member for transferring power, however, this does not fall within the scope of the invention. In an example, the elongated tape **138** is composed of a non-elastic material, including, but not limited to, leather, plastic, artificial, and natural fibers. The clamping member **148** connected with the second end portion **146** of the elongated tape **138** (shown in FIG. **3****)** is adapted to be selectively couple with one of the pole member **102** and the handle member **124.**

The handle member **124** further includes the protrusion **152** for detachably connecting the second end portion **146** of the elongated tape **138** with the handle member **124.** The protrusion **152** may be provided at the holding portion **126** of the handle member **124.** In an example, the protrusion **152** may be a tab sturcture or a hook structure adapted to hold the clamping member **148.**

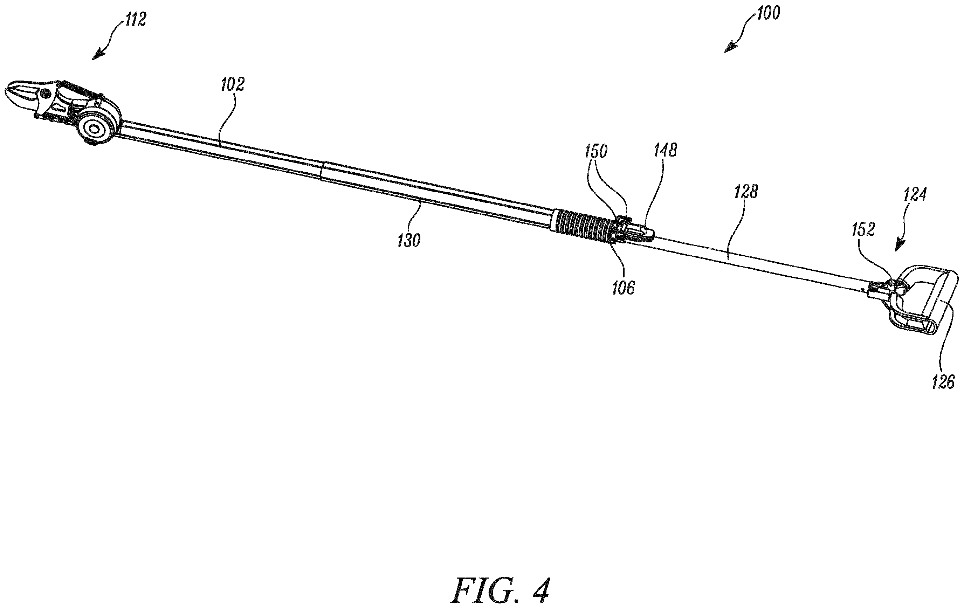

FIG. **4** illustrates a perspective view of the handheld tool **100** when the pulley member **140** of the actuating mechanism **136** is in an engaged condition, according to an embodiment of the present invention. The term "engaged condition" as used herein refers to the condition of the actuating mechanism **136,** at which the pulley member **140** will be in action, allowing the elongated tape **138** to pass over the pulley member **140** (shown in FIG. **2****).** During the engaged condition, the clamping member **148** of the actuating mechanism **136** rests at the notch **150.**

For operating the handheld tool **100,** the handle member **124** is manually extended or pulled outwardly by the operator. The handle member **124** is pulled by using the holding portion **126** of the handle member **124.** When the handle member **124** is pulled outwardly, the handle member **124** is telescopically moved from the pole member **102.** The telescopic movement of the handle member **124** pulls the pulley member **140** through the elongated tape **138** with an action of the pulley member **140.**

During this operation, the clamping member **148** of the tool **100** is located at the second end **106** of the pole member **102** and rests at the notch **150.** The telescopic movement of the handle member **124** moves the first end portion **142** of the elongated tape **138** to move with the pulley member **140** which moves the pulley member **140** along the direction of the movement of the handle member **124.** The movement of the pulley member **140** due to the movement of the handle member **124** activates a drive mechanim **154,** including a rope **156,** a chain **158,** and a spring member **160** for rotating the movable member **118** for cutting or trimming operation.

In the engaged condition, force applied by the operator moves the elongated tape **138** on the pulley member **140,** while also moving the pulley member **140,** along the direction of the movement of the handle member **124.** Due to such movement of the elongated tape **138** with respect to the pulley member **140** a pulley action takes place, resulting in propagation of a first predetermine quantity of force to the implement member **112.**

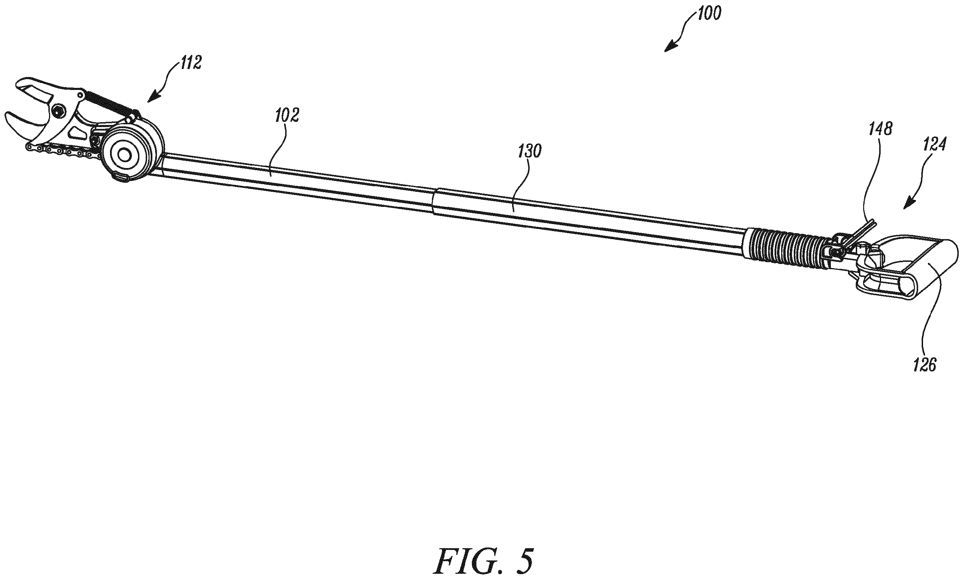

FIG. **5** illustrates a perspective view of the handheld tool **100** when the handle member **124** is positioned for detachably connecting with the elongated tape **138** of the actuating mechanism **136,** according to an embodiment of the present invention. Specifically, the clamping member **148** of the actuating mechanism **136** is positioned at the handle member **124** for detachably connecting the elongated tape **138** with the handle member **124.** The operator can manually place the clamping member **148** for detachably connecting the elongated tape **138** with the handle member **124.**

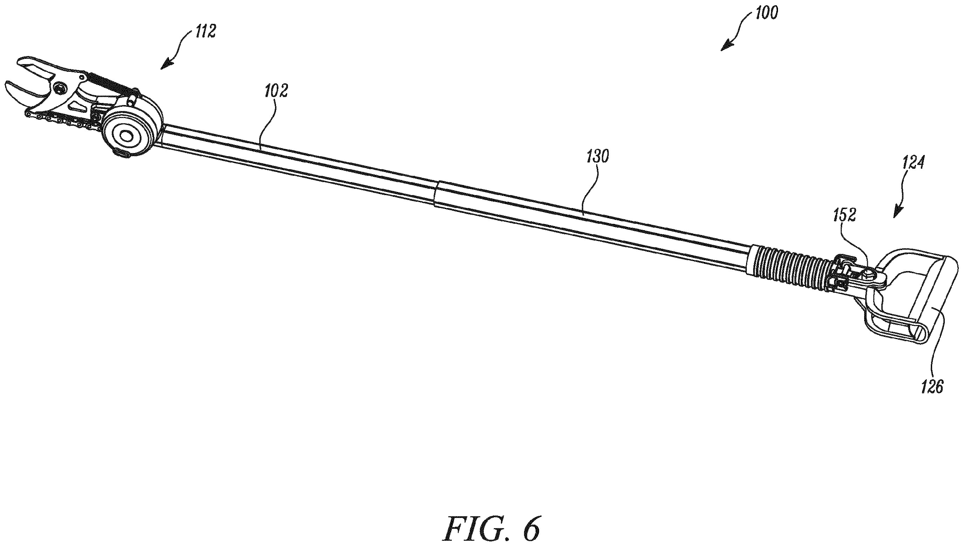

FIG. **6** illustrates a perspective view of the handheld tool **100** when the handle member **124** is detachably connected with the clamping member **148** of the actuating mechanism **136,** according to an embodiment of the present invention. The engagement of the clamping member **148** with the handle member **124** brings the actuating mechanism **136** in a non-engaged condition. The term "non-engaged condition" as used herein refers to a condition of the actuating mechanism **136** when the pulley member **140** is moved along the direction of the movement of the handle member **124** due to movement of the handle member **124** and the pulley member **140** action does not take place. When the handle member **124** is located at the second end **106** of the pole member **102,** the clamping member **148** connected to the second end portion **146** detachably connects to the handle member **124.** The clamping member **148** is placed on the protrusion **152** for detachable connection.

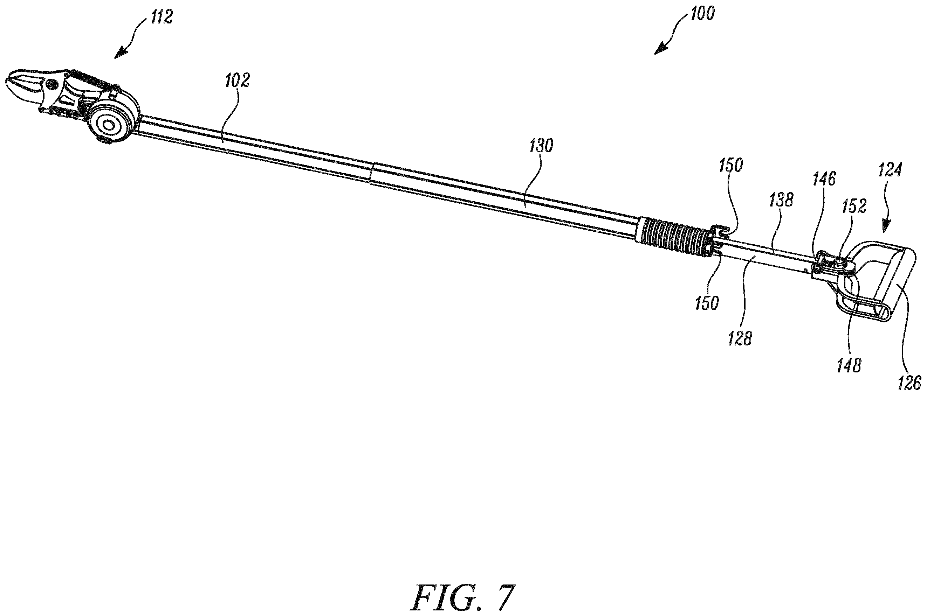

FIG. **7** illustrates a perspective view of the handheld tool **100** when the pulley member **140** of the actuating mechanism **136** is in the non-engaged condition, according to an embodiment of the present invention. The handle member **124** detachably connected with the clamping member **148** may be pulled by the operator for operating the cutting or trimming operation. Due to pulling of the handle member **124** telescopically outwardly, the clamping member **148** connected to the handle member **124** is pulled along the direction of movement of the handle member **124.** The telescopic movement of the handle member **124** moves both the first end portion **142** and the second end portion **146** of the elongated tape **138.** The movement of both the first end portion **142** and the second end portion **146** moves the pulley member **140.** The movement of the pulley member **140** due to the movement of the handle member **124** activates the drive mechanim **154,** including the rope **156,** the chain **158,** and the spring member **160** for rotating the movable member **118** for cutting or trimming operation.

In the non-engaged condition of the pulley member **140** of the tool **100,** force applied by the operator moves the elongated tape **138** along with the pulley member **140,** along the direction of the movement of the handle member **124.** Such movement of the elongated tape **138** and the pulley member **140,** results in propagation of a second predetermine quantity of force to the implement member **112.** The second predetermine quantity of force to the implement member **112,** i.e. force propogated in the non-engaged condition is less than the first predetermine quantity of force to the implement member **112,** i.e. force propogated in the engaged condition.

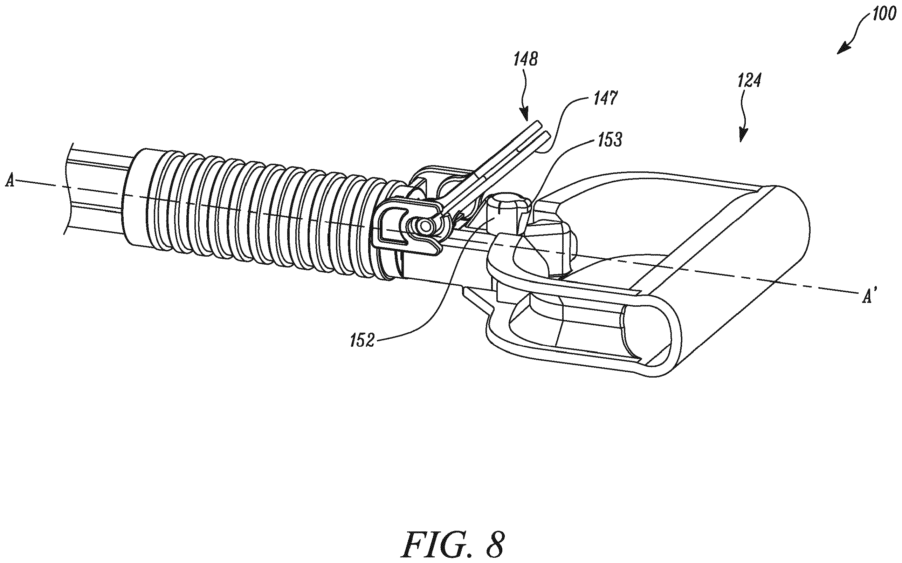

The embodiments described in the FIGS. **8-10** may constitute to an independent invention and may be established as a divisional application. FIG. **8** illustrates a perspective view of a portion of the handheld tool **100** when the handle member **124** is positioned for detachably connecting with the clamping member **148** of the actuating mechanism **136,** according to another embodiment of the present invention. The protrusion **152** of the handle member **124** includes a bulged portion **153.** In an embodiment, the bulged portion **153** may have a bulged profile. The clamping member **148** of the actuating mechanism **136** is positioned at the bulged portion **153** for detachably connecting the elongated tape **138** with the handle member **124** manually. The operator can manually place the clamping member **148** on the protrusion **152** for detachably connecting the elongated tape **138** with the handle member **124.** The clamping member **148** includes a bottom surface **147** which facilitates lifting of the clamping member **148** from the protrusion **152** by the operator.

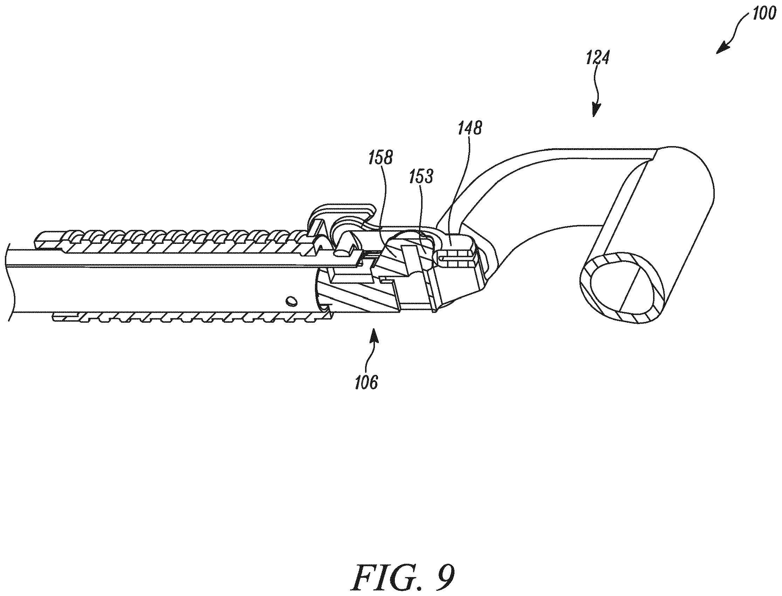

FIG. **9** illustrates a sectional view of the handheld tool **100** along axis **A-A',** of the FIG. **8****,** according to an embodiment of the present invention. In the illustrated embodiment, the handle member **124** is detachably connected with the clamping member **148** of the actuating mechanism **136** manually. When the operator wants to connect the clamping member **148** to the handle member **124,** the operator may pull and push the clamping member **148** using a finger, on the protrusion **152.** Thus, a manual locking is established between the clamping member **148** and the handle member **124.** The engagement of the clamping member **148** with the handle member **124** brings the actuating mechanism **136** in a non-engaged condition. When the handle member **124** is located at the second end **106** of the pole member **102,** the clamping member **148** connected to the second end portion **146** detachably connects to the handle member **124.** The bulged portion **153** in the protrusion **152** is adapted to hold the clamping member **148** from detachment while the operator pulls the handle member **124** for cutting or trimming operations. In an embodiment, the bulged portion **153** may be in a wedge shaped profile. In another embodiment, the protrusion **152** may be provided with a circular hook which serves the purpose of locking of the clamping member **148** from slipping or disengaging from the handle member **124** while the handle member **124** is either pulled for operation or released from operation.

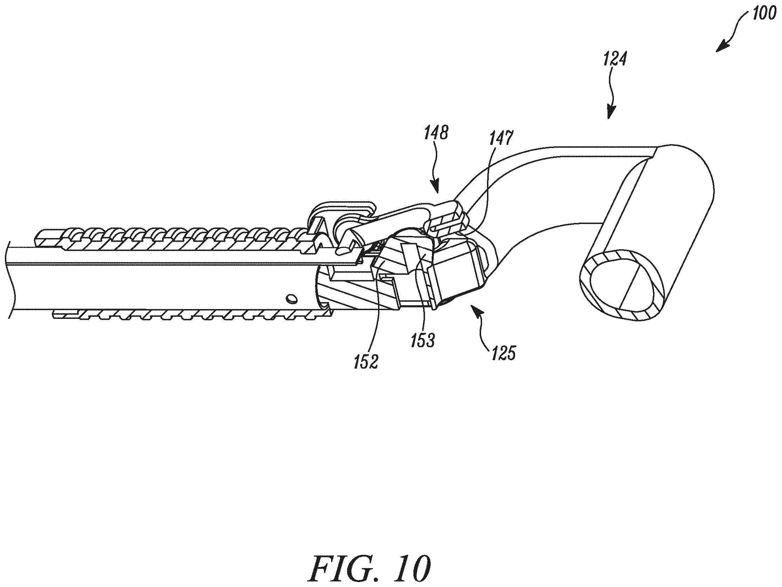

FIG. **10** illustrates a sectional view of the handheld tool **100** shown in FIG. **8** when the clamping member **148** detachably connected with the handle member **124** is removed from the protrusion **152** for detaching the clamping member **148** from the handle member **124,** according to an embodiment of the present invention. The handle member **124** is provided with a cut-out **125** proximal to the bulged portion **153** for allowing operator's access for lift the clamping member **148** seated on the bulged portion **153.** When the operator wants to detach the clamping member **148** from the handle member **124,** the operator may release the locking of the clamping member **148** from the protrusion **152** by lifting the bottom surface **147** of the clamping member **148** from the cut-out **125.** Thus, the cut-out **125** in the handle member **124** facilitates the operator's handle for easily lifting the clamping member **148.**

The handheld tool **100** disclosed in the present invention finds in potential application in pruning tools. However, the handheld tool **100** may also find its application in other gardening tools.

The handheld tool **100** can be used for cutting or trimming both thick and small branches of the plants.

The handheld tool **100** having the elongated tape **138** detachably coupled at the pole member **102** provides the engaged condition of the pulley member **140.** The engaged condition provides an advantage of providing the first predetermined quantity of force to the implement member **112** for cutting or trimming harder parts of the plants.

The handheld tool **100** disclosed in the present invention having the elongated tape **138** detachably coupled to the handle member **124** provides the non-engaged condition of the pulley member **140.** The non-engaged condition provides an advantage of providing the second predetermined quantity of force to the implement member **112** for cutting or trimming softer parts of the plants.

According to an aspect of the present invention, when the handle member is pulled to substantially half length of the elongated tube portion, the handheld tool may cut softer parts at a faster rate and thus it may be convenient for in operation.

The handle member **124** having the protrusion **152** and the bulged portion **153** in the protrusion **152** provides a locking of the clamping member **148** with the handheld tool **100.**

The bulged portion **153** in the protrusion **152** prevents the disengagement of the clamping member **148** from the handle member **124** by providing a slanted/bulged profile which restrains s movement of the clamping member **148** from the handle member **124.**

The cut-out **125** in the handle member **124** helps the operator to access the bottom surface **147** of the clamping member **148** for releasing the locking of the clamping member **148** from the protrusion **152** by lifting the bottom surface **147** of the clamping member **148** from the cut-out **125.** Specifically, the cut-out **125** allows application of force on the bottom surface **147** of the clamping member **148** for lifting the clamping member **148** seated on the bulged portion **153** of the protrusion **152.** Thus, the cut-out **125** in the handle member **124** facilitates the operator's hand or finger for lifting the clamping member **148** with ease.

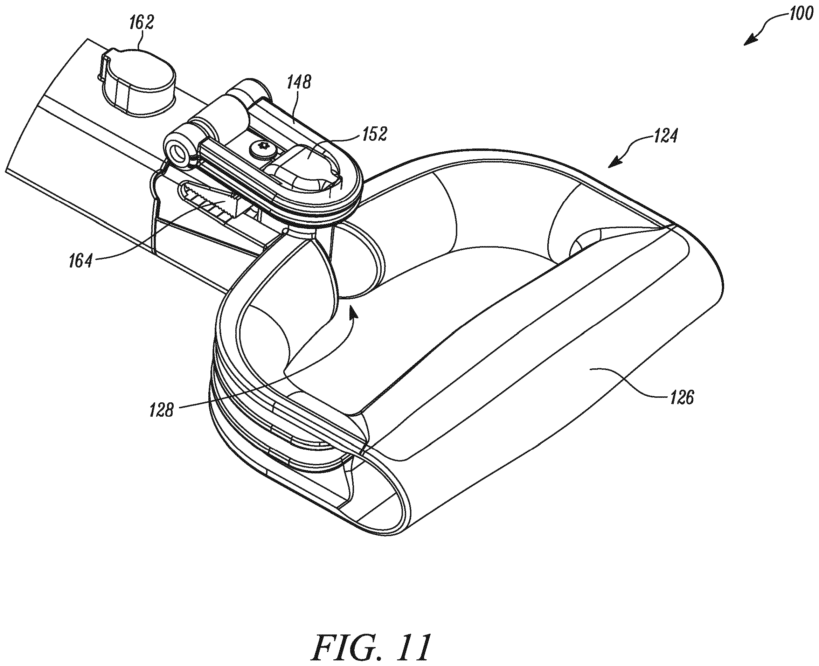

FIG. **11** illustrates the handheld tool **100** with the clamping member **148** detachably connected with the handle member **124** around the protrusion **152,** according to an embodiment of the present invention. The handheld tool **100** further includes an additional protrusion **162** for clamping of the clamping member **148** even during the non-engaged condition of the pulley member **140** of the tool **100.** From aesthetic and implementation considerations, the additional protrusion **162** may be presented diametrically (and symmetrically) about the protrusion **152,** leading to a mirror-image type arrangement of the protrusion **152** and the additional protrusion **162.** In some embodiments, the additional protrusion **162** may be removably attached to the handheld tool **100** such that it can be readily removed depending upon the type of application of the handheld tool **100.** Moreover, the additional protrusion **162** may be used for detachably engaging the clamping member **148** for non-working cases such as maintenance of the handheld tool **100** such as adjustment of the elongated tape **137** with the wedge adjuster **164.** This provides better safety and security during operation of the handheld tool **100** among other benefits.

The handheld tool **100** includes a wedge adjuster **164** adapted to connect with the elongated tape **138** and the handle member **124.** The wedge adjuster **164** is used to effectuate any change or adjustment in length or tightness of the elongated tape **138** as would be required during operating life of the handheld tool **100.** Further, during working of the handheld tool **100,** the elongated tape **138** may undergo change in length after a certain period and/or depending upon the type of application. This would require adjustment of the elongated tape **138** which the present disclosure allows by use of the wedge adjuster **164.**

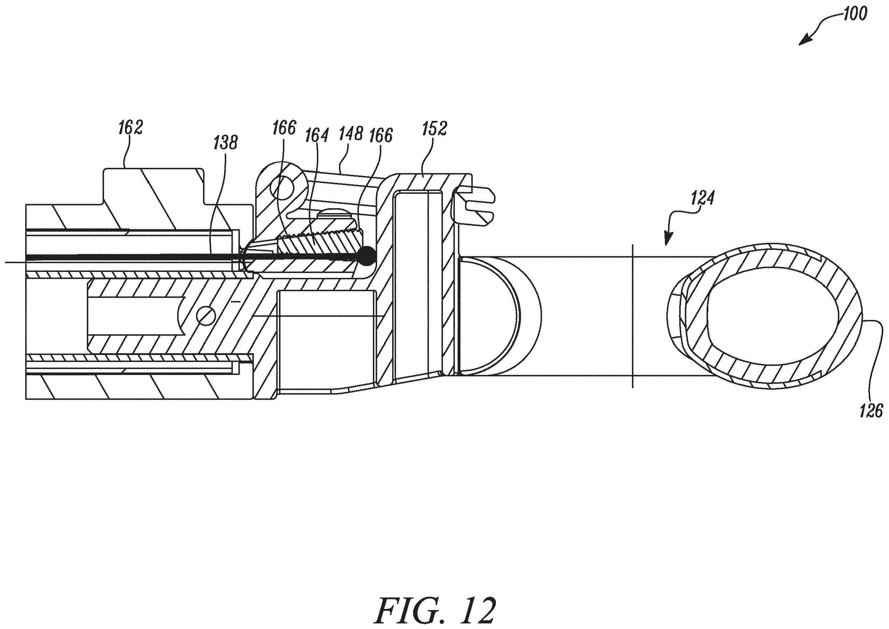

The wedge adjuster **164** as illustrated in the present disclosure is in the shape of a trapezoid, however, actual implementation of the handheld tool **100** may include the wedge adjuster **164** of any other shape such as, but not limited to, triangular, polynomial or any other shape as used or known in the art. Moreover, FIG. **12** illustrates a side cross-sectional view of the handle member **124** of the handheld tool **100,** according to an embodiment of the present invention. The wedge adjuster **164** is coupled to the second end portion **146** of the elongated tape **138** so as to obtain aforementioned benefits, among others. Further, presence of the wedge adjuster **164** ensures less chances of a slack-prone operation of the elongated tape **130** among other benefits.

The wedge adjuster **164** includes corrugations **166** (best illustrated in FIG. **12****)** around at least one side of the wedge adjuster **164,** preferably around sides in contact with the elongated tape **138** and/or any contacting surface of the handle member **124.** The present disclosure illustrates the corrugations **166** with saw-tooth or zig-zag shape, however, actual implementations could make use of any other shape (say pin, thread and the like) of the corrugations **166** as used or known in the art. Presence of the corrugations **166** improves engagement of the wedge adjuster **164** with the elongated tape **138** and/or the handle member **124.** Thus, the wedge adjuster of the present disclosure provides less slack-prone operation of the elongated tape **130** along with provision to adjust slackness, if any, of the elongated tape **138.** With one embodiment the wedge adjuster **164** could further be fixed in place with the help of a screw or alike or with the help of a press fitting.

In the drawings and specification, there have been disclosed preferred embodiments and examples of the invention and, although specific terms are employed, they are used in a generic and descriptive sense only and not for the purpose of limitation of the scope of the invention being set forth in the following claims.

### List of elements

- 100: Handheld tool or Tool
- 102: Pole member
- 104: First end
- 106: Second end
- 108: Cylindrical tubular member
- 110: Central hole portion
- 112: Implement member
- 114: Tool portion
- 116: Housing
- 118: Movable member
- 120: Non-movable member
- 122: Pivot point
- 124: Handle member
- 125: Cut-out
- 126: Holding portion
- 128: Elongated tube portion
- 130: Gripping handle
- 132: Gripping member
- 134: Holding member
- 136: Actuating mechanism
- 138: Elongated tape
- 140: Pulley member
- 142: First end portion
- 144: First end
- 146: Second end portion
- 147: Bottom surface
- 148: Clamping member
- 150: Notch
- 152: Protrusion
- 153: Bulged portion
- 154: Drive mechanism
- 156: Rope
- 158: Chain
- 160: Spring member
- 162: Additional protrusion
- 164: Wedge adjuster
- 166: Corrugations
- A-A': Axis

## Claims

1. A handheld tool **(100)** comprising:
a pole member **(102)** having a first end **(104)** and a second end **(106)** distal to the first end **(104);**
an implement member **(112)** operably disposed at the first end **(104)** of the pole member **(102);**
a handle member **(124)** having a holding portion **(126)** and an elongated tube portion **(128)** extending from the holding portion **(126),** wherein the elongated tube portion **(128)** is telescopically associated with the pole member **(102),** allowing sliding movement of the elongated tube portion **(128)** relative to the pole member **(102);** and
an actuating mechanism **(136)** having an elongated tape **(138)** slidably disposed within the pole member **(102)** and coupled to the implement member **(112),** the elongated tape **(138)** comprising a first end portion **(142)** and a second end portion **(146),** wherein the first end portion (142) is connected to the elongated tube portion **(128)** of the handle member **(124);**
the actuating mechanism **(136)** further includes a pulley member **(140)** interfaced between the implement member **(112)** and the elongated tape **(138)** of the actuating mechanism **(136),** such that movement of the elongated tape **(138)** engages the pulley member **(140)** to operate the implement member **(112);**
**characterized in that,**
the second end portion (146) of the elongated tape (138) is adapted to be selectively coupled with one of the pole member **(102)** and the handle member **(124)** through a clamping member (148);
wherein telescopic movement of the handle member **(124)** moves both the first end portion **(142)** and the second end portion **(146)** of the elongated tape **(138)** to move along with the pulley member **(140),** when the second end portion **(146)** is coupled to the handle member **(124)** through the clamping member (148); and
wherein telescopic movement of the handle member **(124)** moves the first end portion **(142)** of the elongated tape **(138)** to move along with the pulley member **(140),** when the second end portion **(146)** is non-movably coupled to the pole member **(102)** through the clamping member (148).

2. The handheld tool **(100)** of claim 1, wherein the handle member **(124)** includes a protrusion **(152)** for detachable connection thus coupling the clamping member **(148)** of the elongated tape **(138)** with the handle member **(124).**

3. The handheld tool **(100)** of claim 2, wherein the clamping member **(148)** is pulled and placed over the protrusion **(152)** for detachable connection thus coupling the elongated tape **(138)** with the handle member **(124).**

4. The handheld tool **(100)** of claims 2 and 3, wherein the protrusion **(152)** includes a bulged portion **(153)** for seating the clamping member **(148)** at the protrusion **(152).**

5. The handheld tool **(100)** of claim 4, wherein the handle member **(124)** includes a cut-out **(125)** proximal to the bulged portion **(153).**

6. The handheld tool **(100)** of claim 5, wherein the cut-out **(125)** allows application of force on a bottom surface **(147)** of the clamping member **(148)** for lifting the clamping member **(148)** seated on the bulged portion **(153)** of the protrusion **(152).**

7. The handheld tool **(100)** of claim 1, wherein the handheld tool **(100)** includes any of a pruning lopper and a tool with at least one movable member.

8. The handheld tool **(100)** of claim 1, wherein the elongated tape **(138)** includes any of a cable, a rope, and a belt.

9. The handheld tool **(100)** of claim 1, wherein the elongated tape **(138)** is composed of a non-elastic material.

10. The handheld tool **(100)** of claim 1 further includes a gripping handle **(130)** fixedly disposed on the pole member **(102).**

11. The handheld tool **(100)** of claim 1 further includes an additional protrusion **(162)** for clamping of the clamping member **(148).**

12. The handheld tool **(100)** of claim 1 further includes a wedge adjuster **(164)** adapted to be connect with the elongated tape **(138)** and the handle member **(124).**

13. The handheld tool **(100)** of claim 1, wherein the wedge adjuster **(164)** includes corrugations **(166)** around at least one side of the wedge adjuster **(164).**

## Patentansprüche

1. Handwerkzeug (100), umfassend:
ein Stangenelement (102) mit einem ersten Ende (104) und einem zweiten Ende (106) distal zum ersten Ende (104);
ein Geräteelement (112), das funktionsfähig am ersten Ende (104) des Stangenelements (102) angeordnet ist;
ein Griffelement (124) mit einem Halteabschnitt (126) und einem länglichen Rohrabschnitt (128), der sich von dem Halteabschnitt (126) aus erstreckt, wobei der längliche Rohrabschnitt (128) teleskopisch mit dem Stangenelement (102) verbunden ist, um eine Gleitbewegung des länglichen Rohrabschnitts (128) relativ zu dem Stangenelement (102) zu ermöglichen; und
einen Betätigungsmechanismus (136) mit einem länglichen Band (138), das verschiebbar innerhalb des Stangenelements (102) angeordnet und mit dem Geräteelement (112) verbunden ist, wobei das längliche Band (138) einen ersten Endabschnitt (142) und einen zweiten Endabschnitt (146) umfasst, wobei der erste Endabschnitt (142) mit dem länglichen Rohrabschnitt (128) des Griffelements (124) verbunden ist;
der Betätigungsmechanismus (136) ferner ein Riemenscheibenelement (140) umfasst, das zwischen dem Geräteelement (112) und dem länglichen Band (138) des Betätigungsmechanismus (136) angeordnet ist, so dass die Bewegung des länglichen Bandes (138) mit dem Riemenscheibenelement (140) in Eingriff kommt, um das Geräteelement (112) zu betätigen;
**dadurch gekennzeichnet, dass**,
der zweite Endabschnitt (146) des länglichen Bandes (138) dazu ausgelegt ist, selektiv entweder mit dem Stangenelement (102) oder dem Griffelement (124) über ein Klemmelement (148) verbunden zu werden;
wobei eine teleskopische Bewegung des Griffelements (124) sowohl den ersten Endabschnitt (142) als auch den zweiten Endabschnitt (146) des langgestreckten Bandes (138) bewegt, um sich zusammen mit dem Riemenscheibenelement (140) zu bewegen, wenn der zweite Endabschnitt (146) über das Klemmelement (148) mit dem Griffelement (124) verbunden ist; und
wobei eine teleskopische Bewegung des Griffelements (124) den ersten Endabschnitt (142) des länglichen Bandes (138) bewegt, um sich zusammen mit dem Riemenscheibenelement (140) zu bewegen, wenn der zweite Endabschnitt (146) durch das Klemmelement (148) unbeweglich mit dem Stangenelement (102) verbunden ist.

2. Handwerkzeug (100) nach Anspruch 1, wobei das Griffelement (124) einen Vorsprung (152) zur lösbaren Verbindung umfasst, wodurch das Klemmelement (148) des länglichen Bandes (138) mit dem Griffelement (124) verbunden ist.

3. Handwerkzeug (100) nach Anspruch 2, wobei das Klemmelement (148) gezogen und zur lösbaren Verbindung über den Vorsprung (152) gelegt wird, wodurch das längliche Band (138) mit dem Griffelement (124) verbunden ist.

4. Handwerkzeug (100) nach Anspruch 2 und 3, wobei der Vorsprung (152) einen gewölbten Abschnitt (153) zur Aufnahme des Klemmelements (148) am Vorsprung (152) umfasst.

5. Handwerkzeug (100) nach Anspruch 4, wobei das Griffelement (124) einen Ausschnitt (125) proximal zum gewölbten Abschnitt (153) umfasst.

6. Handwerkzeug (100) nach Anspruch 5, wobei der Ausschnitt (125) die Anwendung von Kraft auf eine untere Fläche (147) des Klemmelements (148) zum Anheben des Klemmelements (148), das auf dem gewölbten Abschnitt (153) des Vorsprungs (152) sitzt, erlaubt.

7. Handwerkzeug (100) nach Anspruch 1, wobei das Handwerkzeug (100) jede Gartenschere und ein Werkzeug mit mindestens einem beweglichen Element umfasst.

8. Handwerkzeug (100) nach Anspruch 1, wobei das längliche Band (138) ein Kabel, ein Seil oder einen Gürtel umfasst.

9. Handwerkzeug (100) nach Anspruch 1, wobei das längliche Band (138) aus einem nicht-elastischen Material besteht.

10. Handwerkzeug (100) nach Anspruch 1, ferner umfassend einen Handgriff (130), der fest auf dem Stangenelement (102) angeordnet ist.

11. Handwerkzeug (100) nach Anspruch 1, ferner umfassend einen zusätzlichen Vorsprung (162) zum Klemmen des Klemmelements (148).

12. Handwerkzeug (100) nach Anspruch 1, ferner umfassend einen Keiljustierer (164), der so ausgelegt ist, dass er mit dem länglichen Band (138) und dem Griffelement (124) verbunden werden kann.

13. Handwerkzeug (100) nach Anspruch 1, wobei der Keiljustierer (164) um mindestens eine Seite des Keiljustierers (164) herum Riffelungen (166) aufweist.

## Revendications

1. Outil à main (100) comprenant :
un élément de perche (102) ayant une première extrémité (104) et une seconde extrémité (106) distale par rapport à la première extrémité (104) ;
un élément d'outil (112) disposé de manière fonctionnelle au niveau de la première extrémité (104) de l'élément de perche (102) ;
un élément de poignée (124) ayant une partie de maintien (126) et une partie de tube allongée (128) qui s'étend de la partie de maintien (126), où la partie de tube allongée (128) est associée télescopiquement à l'élément de perche (102), permettant un mouvement coulissant de la partie de tube allongée (128) par rapport à l'élément de perche (102) ; et
un mécanisme d'actionnement (136) ayant une bande allongée (138) disposée de manière coulissante dans l'élément de perche (102) et couplée à l'élément d'outil (112), la bande allongée (138) comprenant une première partie d'extrémité (142) et une seconde partie d'extrémité (146), où la première partie d'extrémité (142) est reliée à la partie de tube allongée (128) de l'élément de poignée (124) ;
le mécanisme d'actionnement (136) comprend en outre un élément de poulie (140) relié entre l'élément d'outil (112) et la bande allongée (138) du mécanisme d'actionnement (136), de manière à ce que le mouvement de la bande allongée (138) engage l'élément de poulie (140) pour actionner l'élément d'outil (112) ; **caractérisé en ce que**,
la seconde partie d'extrémité (146) de la bande allongée (138) est conçue pour être sélectivement couplée à l'un de l'élément de perche (102) et de l'élément de poignée (124) à travers un élément de serrage (148) ;
où le mouvement télescopique de l'élément de poignée (124) déplace la première partie d'extrémité (142) et la seconde partie d'extrémité (146) de la bande allongée (138) pour se déplacer avec l'élément de poulie (140), quand la seconde partie d'extrémité (146) est couplée à l'élément de poignée (124) à travers l'élément de serrage (148) ; et
où le mouvement télescopique de l'élément de poignée (124) déplace la première partie d'extrémité (142) de la bande allongée (138) pour se déplacer avec l'élément de poulie (140), quand la seconde partie d'extrémité (146) est couplée non mobile à l'élément de perche (102) à travers l'élément de serrage (148).

2. Outil à main (100) selon la revendication 1, où l'élément de poignée (124) comprend une protubérance (152) pour une liaison détachable couplant ainsi l'élément de serrage (148) de la bande allongée (138) à l'élément de poignée (124).

3. Outil à main (100) selon la revendication 2, où l'élément de serrage (148) est tiré et placé sur la protubérance (152) pour une liaison détachable couplant ainsi la bande allongée (138) à l'élément de poignée (124).

4. Outil à main (100) selon les revendications 2 et 3, où la protubérance (152) comprend une partie bombée (153) pour placer l'élément de serrage (148) au niveau de la protubérance (152).

5. Outil à main (100) selon la revendication 4, où l'élément de poignée (124) comprend une découpe (125) proximale à la partie bombée (153).

6. Outil à main (100) selon la revendication 5, où la découpe (125) permet l'application de force sur la surface inférieure (147) de l'élément de serrage (148) pour soulever l'élément de serrage (148) placé sur la partie bombée (153) de la protubérance (152).

7. Outil à main (100) selon la revendication 1, où l'outil à main (100) comprend l'un quelconque d'un coupe-branches et d'un outil avec au moins un élément mobile.

8. Outil à main (100) selon la revendication 1, où la bande allongée (138) comprend l'un quelconque d'un câble, d'une corde et d'une ceinture.

9. Outil à main (100) selon la revendication 1, où la bande allongée (138) est composée d'un matériau non élastique.

10. Outil à main (100) selon la revendication 1 comprenant en outre une poignée de préhension (130) disposée fixement sur l'élément de perche (102).

11. Outil à main (100) selon la revendication 1 comprenant en outre une protubérance supplémentaire (162) pour serrer l'élément de serrage (148).

12. Outil à main (100) selon la revendication 1 comprenant en outre un ajusteur de coin (164) conçu pour être relié à la bande allongée (138) et l'élément de poignée (124).

13. Outil à main (100) selon la revendication 1, où l'ajusteur de coin (164) comprend des ondulations (166) autour d'au moins un côté de l'ajusteur de coin (164).
